# EUROPÄISCHE PATENTANMELDUNG

(11) **EP 2 022 616 A2**
(43) Veröffentlichungstag der Anmeldung: **11.02.2009**
(21) Anmeldenummer: 08157920.3
(22) Anmeldetag: 10.06.2008
(51) Int. Cl.: B29C 33/60, C08G 18/00, C08J 9/00

(54) **Wässriges Trennmittel und seine Verwendung bei der Herstellung von Polyurethan-Formkörpern**

(30) Priorität: 09.08.2007 DE 102007037571
(71) Anmelder: Evonik Goldschmidt GmbH, 45127 Essen (DE)
(72) Erfinder: Henning, Torsten, 63457 Hanau (DE); Alexander, Peter, 45279 Essen (DE)

(57) **Zusammenfassung**

Gegenstand der Erfindung sind wässrige Trennmittelzusammensetzungen, welche dadurch gekennzeichnet sind, dass sie als trennaktive Mittel zumindest eine Metallseife und zumindest ein Polyalkylenglykol enthalten.

## Beschreibung

Die Erfindung betrifft wässrige Trennmittel und ihre Verwendung bei der Herstellung von Polyurethan-Formkörpern.

Es ist bekannt, dass die zur Herstellung von Formkörpern verwendeten Polyurethansysteme gegenüber den verwendeten Formwerkstoffen, bevorzugt thermisch stark leitfähige Werkstoffe wie Metalle, eine starke Adhäsion zeigen. Daher werden bei der Entformung der Polyurethan-Formkörper Trennmittel benötigt, die auf die mit Polyurethanen und/oder der Polyurethanreaktionsmischung in Berührung kommenden Formwandungen, aufgebracht werden.

Solche Trennmittel bestehen üblicherweise aus Dispersionen oder Emulsionen von Wachsen, Seifen, Ölen und/oder Siliconen in Lösungsmitteln wie Kohlenwasserstoffe oder Wasser.

Nach Aufbringen des Trennmittels auf die Form verdampft das Lösungsmittel und die nichtflüchtigen trennaktiven Substanzen bilden einen dünnen Trennfilm, der gewährleisten soll, dass der Polyurethan-Formkörper nach der Herstellung leicht aus der Form entnommen werden kann.

Um die Umweltbelastung mit organischem Material zu reduzieren, besteht ein hohes Interesse an Trennmitteln auf wässriger Basis, die frei von flüchtigem organischem Material sind. Die im Markt befindlichen wässrigen Trennmittel zeigen jedoch gegenüber klassischen, organische Lösungsmittel enthaltenden Trennmitteln den Nachteil, dass nach dem Verdampfen eines Großteils des Wassers immer ein dünner Wasserfilm in der Form zurückbleibt, der sich bei den üblichen Formtemperaturen von 45 bis 80 °C, bevorzugt 50 bis 75 °C, nicht (vollständig) verflüchtigt und mit den Isocyanatverbindungen des Polyurethansystems Reaktionen eingeht, die zu sehr harten Polyharnstoffverbindungen führen. Dadurch werden die Formoberflächen gestört. Sie erhalten einen so genannten Aufbau von dem sie aufwändig gereinigt werden müssen.

Eine typische Klasse von wässrigen Trennmitteln sind Seifenlösungen also Lösungen von Metallfettsäuresalzen in Wasser, häufig unter Zuhilfenahme von Alkoholen, um die Viskosität niedrig zu halten und damit das Verlaufsverhalten und die Fähigkeit zur Benetzung von Formoberflächen optimal zu gestalten. Ganz allgemein haben sich gesättigte oder ungesättigte Carbonsäuren mit 8 bis 22 Kohlenstoffatomen, z. B. in Form ihrer Alkali-, Erdalkali-, Zink- oder Aluminiumsalze als brauchbar gezeigt.

Insbesondere DE 36 00 368 beschreibt Lösungen von Natriumisostearat in Wasser-Alkohol-Geschmischen als bezüglich der Benetzungsfähigkeit optimierte Trennmittel. Als bevorzugte Alkohole werden Ethanol, Propanol oder Butanol genannt.

Die beschriebenen Seifenlösungen werden vor jeder Entformung neu als Trennfilm in die Form eingebracht. In der Praxis zeigen sie eine zufriedenstellende Trennwirkung jedoch nur über wenige Entformungen. Je nach Polyurethanschaumtyp beginnt die Trennwirkung nach ungefähr 20 bis 50 Entformungen nachzulassen. Der Trennfilm, der nach der Verdunstung eines Großteils des Wassers hauptsächlich aus der jeweiligen Seife besteht, beginnt hart und bröselig zu werden und nach einiger Zeit ist keine Trennung mehr möglich.
Aufgabe der vorliegenden Erfindung war es daher, wässrige Formtrennmittel bereitzustellen, die einen oder mehrere der Nachteile der Formtrennmittel des Standes der Technik nicht aufweisen und die vorzugsweise eine gute Trennwirkung zeigen, die keinen Polyharnstoffaufbau auf den Formoberflächen hinterlassen und/oder deren Trennwirkung auch bei längerer wiederholter Anwendung nicht nachlässt.

Überraschenderweise wurde nun gefunden, dass eine wässrige Dispersion klassischer trennaktiver Seifen, z. B. Alkali-, Erdalkali-, Zink- oder Aluminiumsalze von gesättigten oder ungesättigten Carbonsäuren mit 8 bis 22 Kohlenstoffatomen in Mengen von 0,5 bis 40 Gew.-%, bevorzugt 1 bis 30 Gew.-%, in Kombination mit Polyethern, auch als Polyalkylenglykole bezeichnet, in Mengen von 0,1 bis 20 Gew.-%, bevorzugt 0,5 bis 10 Gew.-%, bezogen auf die wässrige Gesamtformulierung, diese Aufgabe löst.

Gegenstand der vorliegenden Erfindung sind deshalb wässrige Trennmittelzusammensetzungen, welche dadurch gekennzeichnet sind, dass sie als trennaktives Mittel (Mittel das in der Lage ist, auf der Formoberfläche einen Trennfilm zu bilden) zumindest eine Metallseife enthalten und zusätzlich zumindest ein Polyalkylenglykol enthalten.

Außerdem ist Gegenstand der vorliegenden Erfindung die Verwendung eines erfindungsgemäßen Trennmittels zur Herstellung von Polyurethan-Formkörpern.

Die erfindungsgemäßen Trennmittel haben den Vorteil, dass der Seifentrennfilm durch die vorhandenen Polyether geschmeidig bleibt, auch wenn ein Großteil des Wassers verdunstet ist.

Die erfindungsgemäßen Trennmittel und deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Die erfindungsgemäßen wässrigen Trennmittelzusammensetzungen zeichnen sich dadurch aus, dass sie als trennaktive Mittel zumindest eine Metallseife und zusätzlich zumindest ein Polyalkylenglykol und gegebenenfalls Hilfs-und/oder Zusatzstoffe enthalten.

Als trennaktive Metallseifen können in den erfindungsgemäßen Trennmittelzusammensetzungen z. B. Alkali-, Erdalkali-, Zink- oder Aluminiumsalze, insbesondere Alkalisalze von gesättigten oder ungesättigten Carbonsäuren mit 8 bis 22 Kohlenstoffatomen vorhanden sein. Bevorzugt sind in den erfindungsgemäßen Zusammensetzungen als Metallseifen Alkalisalze, besonders bevorzugt Lithium-, Natrium- und/oder Kaliumsalze von gesättigten oder ungesättigten Carbonsäuren mit 8 bis 22 Kohlenstoffatomen vorhanden.

Als Metallseifen sind in den erfindungsgemäßen Trennmittelzusammensetzungen vorzugsweise Salze von Carbonsäuren vorhanden, die auf bekannten einbasischen Fettsäuren, wie z. B. natürlichen pflanzlichen oder tierischen Fetten oder Ölen mit 8 bis 22 Kohlenstoffatomen, insbesondere mit 12 bis 18 Kohlenstoffatomen basieren. Bevorzugt sind in den erfindungsgemäßen Trennmittelzusammensetzungen als Metallseifen ein oder mehrere Salze der Capronsäure, Caprylsäure, Caprinsäure, Laurinsäure, Myristinsäure, Palmitinsäure, Palmitoleinsäure, Isostearinsäure, Stearinsäure, Ölsäure, Linolsäure, Petroselinsäure, Elaidinsäure, Arachinsäure, Behensäure, Eurucasäure, Gadoleinsäure, Rapsölfettsäure, Sojaölfettsäure, Sonnenblumenölfettsäure, Ricinolsäure, 12-Hydroxystearinsäure und/oder Tallölfettsäure vorhanden. Geeignet sind prinzipiell alle Fettsäuren mit ähnlicher Kettenverteilung. Besonders bevorzugte Metallseifen sind die Salze der Isostearinsäure, 12-Hydroxystearinsäure oder Ölsäure. Ganz besonders bevorzugt als trennaktive Metallseifen sind Alkaliisostearate, insbesondere Natrium- und/oder Kaliumisostearat.

Vorzugsweise sind die trennaktiven Metallseifen in Anteilen von 0,5 bis 40 Gew.-%, bevorzugt 1 bis 30 Gew.-%, besonders bevorzugt 3 bis 20 Gew.-% und ganz besonders bevorzugt 4 bis 10 Gew.-% bezogen auf die Gesamtzusammensetzung enthalten.

Als Polyalkylenglykole können die erfindungsgemäßen Trennmittelzusammensetzungen z. B. solche auf Basis von Ethylenoxid (EO), Propylenoxid (PO) oder EO und PO Ethylenoxid enthalten. Vorzugsweise sind solche Polyalkylenglykole enthalten, die durch Polymerisation bzw. Copolymerisation von Ethylenoxid (EO) und/oder Propylenoxid (PO) mit einem mehrwertigen Alkohol erhältlich sind. Als mehrwertiger Alkohol kann z. B. Ethylenglykol, Diethylenglykol, Triethylenglykol, Tetraethylenglykol, Propandiol-1,2 oder -1,3, Butandiol-1,3 oder -1,4, Hexandiol-1,6, Octandiol-1,8, Dipropylenglykol, Polypropylenglykole, Dibutylenglykol, Polybutylenglykole, Glycerin, Diglycerin, Triglycerin, Trimehtylolpropan, Ditrimethylolpropan, Pentaerythrit, Dipentaerythrit, Chinit, Mannit, Sorbit oder Methylglykosid, vorzugsweise Ethylenglykol, Diethylenglykol, Triethylenglykol, Propandiol-1,2 oder -1,3, Dipropylenglykol, Glycerin oder Pentaerythrit eingesetzt werden.

Die in den erfindungsgemäßen Trennmittelzusammensetzungen enthaltenen Polyalkylenglykole können ein EO/PO-Gewichtsverhältnis von 0 : 100 bis 100 : 0 aufweisen. Es können also sowohl reine Polypropylenoxide als auch reine Polyethylenoxide als auch Mischcopolymerisate enthalten sein. Die Mischcopolymerisate können blockweise oder zufällig angeordnete (randomweise) EO/PO-Einheiten aufweisen.

Vorzugsweise weisen die erfindungsgemäßen Trennmittelzusammensetzungen als Polyalkylenglykol ein Polyalkylenglykol mit einer Molmasse von 200 bis 30.000 g/mol, bevorzugt von 1.000 bis 20.000 g/mol und besonders bevorzugt 2000 bis 10.000 g/mol auf.

Bevorzugt enthalten die erfindungsgemäßen Trennmittelzusammensetzungen als wasserlösliches Polyalkylenglykol ein kommerziell erhältliches Polyalkylenglykol, wie beispielsweise Polyglykol P41/300, Polyglykol P41/3000 oder Polyglykol P41/12000 der Firma Clariant AG.

Bevorzugt enthalten die erfindungsgemäßen Trennmittelzusammensetzungen als Polyalkylenglykol ethylenglykol-, diethylenglykol- oder triethylenglykolgestartetes PO-EOPO-Blockcopolymer, erhältlich als Pluronic® RPE 1720 bis 3110, BASF.

Bevorzugt enthalten die erfindungsgemäßen Trennmittelzusammensetzungen als Polyalkylenglykol Polypropylenoxid, also ein Polyalkylenglykol, welches ausschließlich auf Propylenoxid als Alkylenoxid basiert. Ein solches Polyalkylenglykol ist beispielsweise erhältlich als Acclaim® Polyol 4200 bis 18200 des Herstellers Bayer Material Science LLC.

Da einige der bevorzugten Polyalkylenglykole nicht oder nur schlecht wasserlöslich sein können, können sie bevorzugt in Form einer wässrigen Emulsion in der Zusammensetzung eingesetzt werden. Als Emulgatoren können solche Emulsionen z. B. die unten aufgeführten Emulgatoren, bevorzugt nichtionische Emulgatoren wie ethoxylierte Fettalkohole, ethoxylierte Oxoalkohole und andere Alkoholether, aufweisen. Solche Emulgatoren sind z. B. unter der Bezeichnung Genapol®, Emulsogen®, Hersteller Clariant AG, oder Tego® Alkanol, Hersteller Degussa GmbH/Goldschmidt GmbH erhältlich. Bevorzugte Emulsionen weisen von 30 bis 60 Gew.-% Polyalkylenglykol, von 5 bis 15 Gew.-% Emulgator und ad 100 Gew.-% Wasser auf.

Die erfindungsgemäße Trennmittelzusammensetzung weist die Polyalkylenglykole vorzugsweise in einem Anteil von 0,1 bis 20 Gew.-%, bevorzugt von 0,5 bis 10 Gew.-% und besonders bevorzugt von 2 bis 5 Gew.-% bezogen auf die wässrige Gesamtformulierung auf.

Die erfindungsgemäßen Trennmittelzusammensetzungen enthalten vorzugsweise bzw. bestehen bevorzugt aus 0,5 bis 40 Gew.-%, bevorzugt 1 bis 30 Gew.-%, besonders bevorzugt 3 bis 20 Gew.-% und ganz besonders bevorzugt 5 bis 10 Gew.-% bezogen auf die Gesamtzusammensetzung mindestens einer trennaktiven Metallseife und 0,1 bis 20 Gew.-%, bevorzugt von 0,5 bis 10 Gew.-% und besonders bevorzugt von 2 bis 5 Gew.-% bezogen auf die Gesamtzusammensetzung mindestens eines Polyalkylenglykols und optional Hilfs- und Zusatzstoffen und ad 100 Gew.-% Wasser.

Als Hilfs- und/oder Zusatzstoffe können in der erfindungsgemäßen Trennmittelzusammensetzung eine oder mehrere Verbindungen, ausgewählt aus den Emulgatoren, Katalysatoren, Schaumstabilisatoren Viskositätsmodifizierern, Konservierungsmitteln und/oder kurzkettigen Alkoholen mit bis zu 4 Kohlenstoffatomen vorhanden sein.

Als übliche Hilfs- und/oder Zusatzstoffe können ein oder mehrere Verbindungen enthalten sein, ausgesucht aus der Gruppe
I) Emulgatoren:
   anionische Emulgatoren wie Alkylethercarboxylate, Alkylsulfate, Fettalkoholethoxylatethersulfate, alpha-Olefinsulfonate, Alkylphosphate, Alkylpolyetherphosphate, Alkylsulfosuccinate; nichtionische Emulgatoren wie ethoxylierte Fettalkohole, ethoxylierte Oxoalkohole und andere Alkoholether, Fettamine wie Dimethylalkylamine, Fettsäurealkanolamide, Fettsäureester mit Alkoholen, darunter auch Glycerinester oder Polyglycerinester oder Sorbitolester; kationische Emulgatoren wie sauer gestellte Alkyldimethylamine, quaternäre Stickstoffverbindungen; schließlich zwitterionische Tenside. Bevorzugt sind nichtionische Emulgatoren. Der Anteil der Emulgatoren kann von 0,1 bis 10 Gew.-%, bevorzugt 0,5 bis 6 Gew.-% bezogen auf die Gesamtzusammensetzung betragen;
II) Katalysatoren:
   solche, die typischerweise für die Polyurethanreaktion verwendet werden. Beispielsweise Lewis Säuren wie Zinnverbindungen oder Bismutverbindungen oder Lewis Basen wie tertiäre Amine;
III) Schaumstabilisatoren: Polysiloxan-Polyether-Copolymerisate. Solche werden z. B. in Ed. R. Herrington et al., Appendix E Surfactants, Flexible Polyurethane Foams, The Dow Chemical Company, 2nd edition, 1997 beschrieben;
IV) Viskositätsmodifizierer:
   typische Verdicker wie als Carbomere bezeichnete Polyacrylsäurederivate oder andere Polyelektrolytverdicker wie wasserlösliche Cellulosederivate oder auch Xanthan Gum. Als Viskositätsmodifizierer in wässrigen Formulierungen können auch aliphatische Kohlenwasserstoffe gesehen werden also Benzinfraktionen, die die eingesetzten Wachse aufquellen und so einen verdickenden Effekt zeigen;
V) übliche Konservierungsmittel wie Bakterizide oder Fungizide z. B. Euxyl® 100, Lieferant Schülke & Mayr oder Mergal® K 12, Lieferant Troy und/oder Antioxidantien z. B. Irganox® 1520 L, Hersteller Ciba oder Butylhydroxyanisol;
VI) kurzkettige Alkohole mit bis zu 4 Kohlenstoffatomen, wie z. B. Ethanol, n-Propanol, Isopropanol oder Butanol.

Der Anteil der Hilfs- und Zusatzstoffe an der Gesamtzusammensetzung beträgt vorzugsweise < 15 Gew.-% und bevorzugt < 10 Gew.-%.

Die erfindungsgemäßen Trennmittelzusammensetzungen können nach den im Stand der Technik bekannten Verfahren oder wie nachfolgend beschrieben hergestellt werden. Die Seifen können z. B. aus Metallhydroxid und Fettsäuren oder Fettsäureglyceriden gewonnen werden. Die erhaltenen Metallseifen werden dann mit Wasser verdünnt und anschließend werden Polyalkylenglykole direkt oder in emulgierter Form ggfs. zusammen mit den Hilfs- und Zusatzstoffen zugegeben.

Die Erfindung betrifft weiter die Verwendung der erfindungsgemäßen Trennmittelzusammensetzungen bei der bzw. zur Herstellung von Polyurethan-Formkörpern.

Klassischerweise wird die Form auf die gewünschte Formtemperatur von 45 bis 80 °C, bevorzugt 50 bis 75 °C, gebracht, mit Trennmittel eingesprüht, eine gewisse Zeit - je nach Wasseranteil ca. 1 bis 10 Minuten - gewartet, bis die größte Menge Wasser verdampft ist und dann das reaktive Polyurethansystem aus Polyolen, Polyisocyanaten und gegebenenfalls weiteren Additiven wie Katalysatoren, Schaumstabilisatoren und Treibmitteln, eingepumpt. Die Form wird geschlossen und nach der Aushärtezeit geöffnet und das Formteil entformt.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Liste der eingesetzten Substanzen:

- Novec^{™} Fluorosurfactant FC-4430 = Perfluorbutansulfonat-tensid, Hersteller 3M,
- Bayflex® PU 30IS23 = Polyesterpolyol, Hersteller:
   Bayer Material Science AG,
- Desmodur® PM 53 = Isocyanat, Hersteller Bayer Material Science AG,
- Pluriol® E 200 = Polyethylenglykol mittlere Molmasse 200 g/mol, Hersteller BASF,
- Polyglykol P 41/3000 = Polyalkylenglykol, mittlere Molmasse 15000, Hersteller: Clariant,
- Acclaim® 8200 = Polypropylenoxid mittlere Molmasse 8.000 g/mol, Hersteller Bayer AG,
- Tego® Acid S 100 P = PEG-100-Stearat, Hersteller Degussa GmbH.

### Beispiel 1:

### Trennmittel 1

Zusammensetzung von Trennmittel 1: 4 Gew.-% Kaliumisostearat, 3 Gew.-% Ethanol, 2 Gew.-% Pluriol® E 200, 91 Gew.-% Wasser.

### Beispiel 2:

### Trennmittel 2:

Zusammensetzung von Trennmittel 2: 8 Gew.-% Natriumisostearat, 4 Gew.-% Ethanol, 2 Gew.-% Polyglykol P 41/3000, 86 Gew.-% Wasser.

### Beispiel 3:

### Trennmittel 3:

Zusammensetzung von Trennmittel 3: 10 Gew.-% Kaliumisostearat, 5 Gew.-% Ethanol, 5 Gew.-% einer Emulsion von (35 Gew.-% Acclaim® 8200, 5 Gew.-% Tego® Acid S 100 P und 60 Gew.-% Wasser), 80 Gew.-% Wasser.

### Vergleichsbeispiel A:

### Vergleichstrennmittel A

Zusammensetzung von Vergleichstrennmittel A (angelehnt an Beispiel Nr. 2 aus DE 36 00 368): 4,0 Gew.-% Natriumisostearat, 20,8 Gew.-% Ethanol, 5,0 Gew.-% Butanol, 0,2 Gew.-% Novec^{™} FC-4430, 70 Gew.-% Wasser.

### Trennmittelversuche:

Die Trennmittel wurden mittels einer 0,5 mm Düse in praxisnahen Mengen von 20 g/m² in Testformen eingesprüht und diese für einige Sekunden abgelüftet. Anschließend wurde ein schäumbares Polyurethansystem bestehend aus 100,0 Teilen (Gewichtsteile) Bayflex® PU 30IS23, 10,0 Teilen Ethylenglykol, 1,0 Teilen Diethylenglykol, 0,8 Teilen demineralisiertes, 2,0 Teilen Triethylendiamin (25 Gew.-%ig in Ethylenglykol) und 128,2 Teilen Desmodur® PM 53 in diese Formen bei 50 °C eingeschäumt. Nach dem Aushärten (5 Minuten) wurden die Schaumteile entformt. Das Vorgehen wurde wiederholt, wie in Tabelle 1 angegeben.

**Tabelle 1:**

| Ergebnisse der Trennversuche: | |
|---|---|
| Trennmittel | Anzahl der möglichen Trennvorgänge bis zum Einbrechen der Trennwirkung durch zu unelastischen, brüchigen Trennfilm |
| 1 | 51 |
| 2 | 72 |
| 3 | > 200 |
| A | 18 |

Wie der Tabelle 1 entnommen werden kann, lassen sich mit den erfindungsgemäßen Trennmittelzusammensetzungen deutlich mehr Trennvorgänge durchführen als mit dem Vergleichstrennmittel.

## Patentansprüche

1. Wässrige Trennmittelzusammensetzung, **dadurch gekennzeichnet, dass** sie als trennaktive Mittel zumindest eine Metallseife enthält und zusätzlich zumindest ein Polyalkylenglykol enthält.

2. Trennmittelzusammensetzung gemäß Anspruch 1, **dadurch gekennzeichnet, dass** sie
A) 0,5 bis 40 Gew.-% mindestens einer trennaktiven Metallseife und
B) 0,1 bis 20 Gew.-% mindestens eines Polyalkylenglykols und
C) optional Hilfs- und Zusatzstoffe und
D) ad 100 Gew.-% Wasser
enthält.

3. Trennmittelzusammensetzung gemäß Anspruch 2, **dadurch gekennzeichnet, dass** als Hilfs- und/oder Zusatzstoffe eine oder mehrere Verbindungen, ausgewählt aus den Emulgatoren, Katalysatoren, Schaumstabilisatoren, Viskositätsmodifizierern, Konservierungsmitteln und/oder kurzkettigen Alkoholen mit bis zu 4 Kohlenstoffatomen, vorhanden sind.

4. Trennmittelzusammensetzung gemäß zumindest einem der Ansprüche 1 bis 3, **dadurch gekennzeichnet, dass** als trennaktive Metallseife ein Alkaliisostearat enthalten ist.

5. Trennmittelzusammensetzung gemäß zumindest einem der Ansprüche 1 bis 4, **dadurch gekennzeichnet, dass** als Polyalkylenglykol ein Polyalkylenglykol mit einer Molmasse von 200 bis 30.000 g/mol enthalten ist.

6. Trennmittelzusammensetzung gemäß zumindest einem der Ansprüche 1 bis 5, **dadurch gekennzeichnet, dass** als Polyalkylenglykol ein Polypropylenoxid enthalten ist.

7. Verwendung eines Trennmittels gemäß einem der vorangegangenen Ansprüche zur Herstellung von Polyurethan-Formkörpern.
